# EUROPEAN PATENT APPLICATION

(11) **EP 1 717 940 A2**
(43) Date of publication of application: **02.11.2006**
(21) Application number: 06111234.8
(22) Date of filing: 16.03.2006
(51) Int. Cl.: H02M 3/337

(54) **DC voltage converter with soft switching**

(30) Priority: 04.04.2005 FR 0550873
(71) Applicant: Thomson Licensing, 92100 Boulogne-Billancourt (FR)
(72) Inventor: Marchand, Philippe, 92648 Boulogne Cedex (FR); Ploquin, Didier, 92648 Boulogne Cedex (FR); Morizot, Gerard, 92648 Boulogne Cedex (FR)
(74) Representative: Le Dantec, Claude

(57) **Abstract**

The present invention relates to a DC/DC converter of half-bridge type with soft switching comprising a transformer (Trf). The primary of the converter is of the type with half-bridge arrangement and is linked to an input voltage source (Ve) by way of two switches (T1, T2) and the secondary is of half-wave type and is linked to a load by means of an inductance (Lf). Means are provided for alternately controlling the two switches (T1, T2), at fixed frequency, by pulse width modulation. To reduce the number of components of the converter, a capacitor (Cr') of small value is arranged in series with said primary winding (Lp), which capacitor referred back to the secondary is designed to resonate with said inductance (Lf). The inductance is the transformer's leakage inductance seen from the secondary. The switches are advantageously switched while the current in said inductance is not zero.

## Description

The present invention relates to a high-frequency DC/DC converter of half-bridge type with soft switching and quasi-resonant in current at the secondary. This type of converter is utilizable for any type of kit requiring to be wired up to the mains and providing an isolated DC output voltage. The fields of application are multiple and relate to all products ranging from professional, industrial and also mass-market equipment.

### Prior art

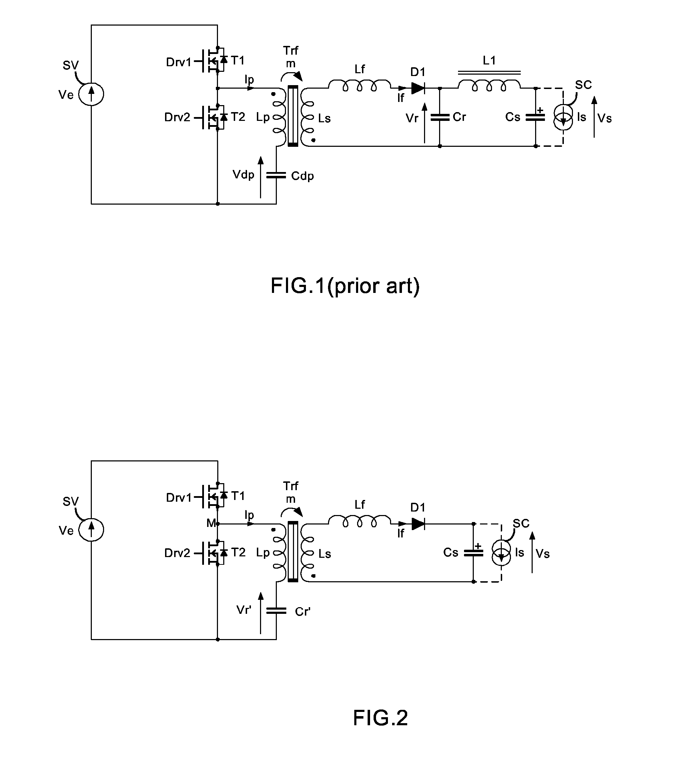

Patent application No. FR 2 738 417 discloses a DC/DC converter with chopped regulation in the form of a half-bridge structure with soft switching at the primary and half-wave quasi-resonant rectification with zero current switching at the secondary. Such a circuit is represented in Figure 1.

With reference to Figure 1, the converter comprises an isolation transformer Trf with a half-bridge arrangement on the primary side and a quasi-resonant circuit with half-wave rectification at the secondary. More precisely, the primary circuit comprises a half-bridge circuit with two switches T1 and T2 arranged in series between the terminals of a voltage generator SV delivering a voltage Ve. The switches T1 and T2 are conventionally MOSFET transistors. The mid-point of the half-bridge circuit is connected to the biased end of the primary winding Lp of the transformer Trf. The other end of the primary winding Lp is connected, via a capacitor Cdp having a high capacitance, to that terminal of the generator SV connected to the switch T2. The switches T1 and T2 are driven by the control signals Drv1 and Drv2 generated on the basis of a pulse width modulation circuit as a function of the output voltage of the converter and the transformer Trf has a turns ratio m.

The nonbiased end of the secondary winding Ls of the transformer Trf is linked by an inductance Lf, corresponding to the leakage inductance seen from the secondary of the transformer Trf, and a diode D1, to a first end of a resonant capacitor Cr, the other end of this capacitor being linked to the biased end of the secondary winding Ls. A smoothing inductance L1 is connected between the diode D1/capacitor Cr junction and one end of a capacitor Cs placed between the output terminals of the converter. The other end of the capacitor CS is connected to the biased end of the secondary winding Ls. A current generator SC delivering a current Is is connected between the output terminals of the converter so as to materialize the current flowing through the load of the converter. The function of the smoothing inductance is to smooth the current provided to the load.

The manner of operation of this converter is well known to the person skilled in the art. It is in detail described in patent application FR 2 738 417. The control signals Drv1 and Drv2 for the switches T1 and T2 are closed one after the other. A dead time is envisaged between the alternate actuations of these switches so that said transistors are in an open state on two occasions during the operating cycle of these two signals. The way in which these control signals are generated is explained in detail in patent application No. FR 2 738 417. The duration of each cycle (= period of the signals Drv1 and Drv2) depends on the primary current Ip that one seeks to obtain to charge the parasitic capacitances of the switches T1 and T2 and thus to have soft switching of the switches. The ratio of the on times of the switches T1 and T2 defines the output voltage of the converter.

With this arrangement, the switching of the switches is performed when the current in the secondary is zero so as to reduce the switching losses. When the switch T2 is closed, the leakage inductance Lf resonates with the capacitor Cr of low value. The soft switching at the primary is ensured by the magnetizing current flowing through the winding Lp of the transformer Trf, engendered by the application of the voltage Ve to the terminals of the primary winding Lp and of the capacitor Cdp and increased by the mean output current referred back to the primary according to the turns ratio.

This arrangement operates very well for relatively low powers requiring only a weak magnetizing current. Otherwise, the increase in the power makes it necessary to increase the value of the magnetizing current in the same proportion so as to ensure soft switching at the primary.

Another drawback is that it comprises a large number of components.

The present invention aims to propose a converter comprising a reduced number of components and capable of delivering more significant power without having to increase the value of the magnetizing current.

The present invention relates to a DC voltage converter with soft switching, comprising a transformer having a primary winding and a secondary winding, the primary of the converter being of the type with half-bridge arrangement and capable of being linked to an input voltage source by way of two switches and the secondary of the converter being of quasi-resonant half-wave type and able to be linked to a load, means for alternately controlling the two switches, at fixed frequency, by pulse width modulation as a function of the output voltage of the converter. According to the invention, a capacitor of small value is arranged in series with the primary winding, which capacitor referred back to the secondary is designed to resonate with an inductance present at the secondary and to produce said quasi-resonance at the secondary.

The inductance is the transformer's leakage inductance seen from the secondary or possibly the series inductance formed from the transformer's leakage inductance seen from the secondary and of an additional inductance arranged between the secondary winding and the load of the converter. The number of resonant components of the converter is thus reduced.

According to a particular mode of operation, the switches are switched while the current in said inductance is zero.

According to a preferred mode of operation, the switches are switched while the current in said inductance is not zero and in that said current is such that, referred back to the primary, it helps to achieve soft switching of the switches.

The invention will be better understood on reading the description which follows, given by way of nonlimiting example, and with reference to the appended drawings among which:
- Figure 1 is an electrical diagram of a converter of the prior art with soft switching,
- Figure 2 is an electrical diagram of a converter according to the invention; and
- Figures 3A to 3F are time charts representative of the manner of operation of the converter of Figure 2.

The proposed circuit, illustrated by Figure 2, differs from that of Figure 1 both by the position of the resonant components and by its mode of operation. In the circuit of Figure 1, the leakage inductance Lf of the transformer Trf as seen from the secondary resonates with the capacitor Cr of low value. According to the invention, the leakage inductance Lf resonates with a capacitor Cr' positioned in place of the capacitor Cdp. More precisely, the transformer's leakage inductance Lf seen from the secondary resonates with the capacitor Cr' referred back to the secondary. The inductance Lf is possibly the series inductance formed from the transformer's leakage inductance seen from the secondary and of an additional inductance arranged between the secondary winding and the load of the converter. The capacitors Cr and Cdp are dispensed with and, as there is no longer any resonant capacitor at the secondary, the smoothing inductance L1 is no longer relevant.

It is possible to operate this converter in the same way as that of Figure 1, that is to say by switching the switches T1 and T2 when the current at the secondary is zero. The benefit of the arrangement is then solely its reduced number of components.

However, according to a preferred mode of operation, the switches T1 and T2 are no longer switched at zero current at the secondary. They are switched while the current in the leakage inductance Lf is not zero, this current referred back to the primary then being added to the magnetizing current generated by the voltage Ve in the primary winding so as to charge all of the parasitic capacitances of the arrangement, in particular the drain/source capacitance (coss) of the transistors T1 and T2 and the parasitic capacitances of the transformer. In this mode, provision is therefore made to interrupt the current-wise resonance of the secondary circuit of the converter so as to ensure soft switching of the switches T1 and T2, regardless of the power to be delivered.

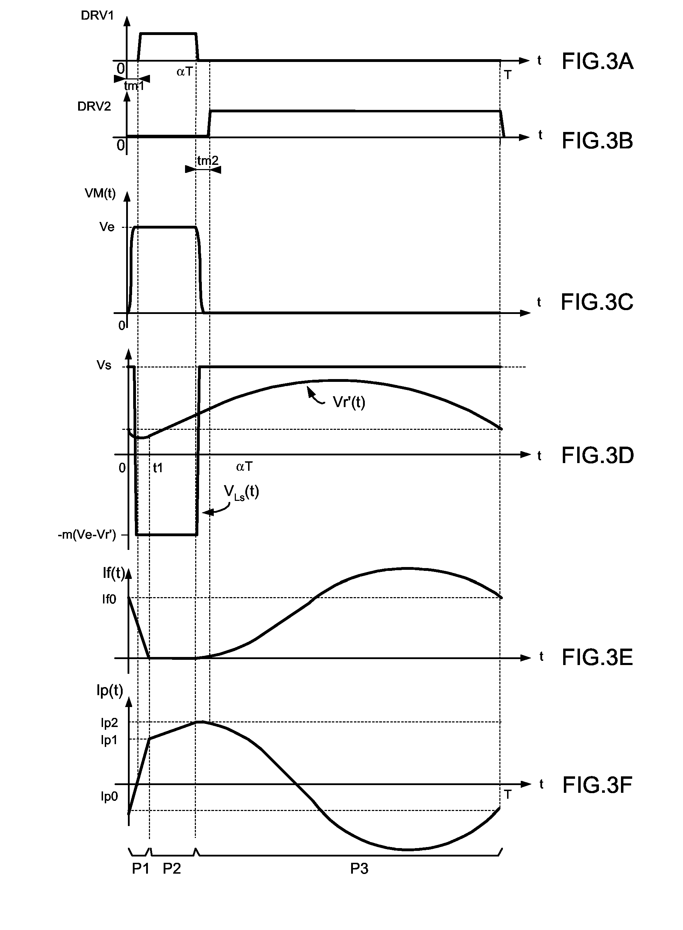

This preferred mode of operation is illustrated by Figures 3A to 3F. In the subsequent description, Ip denotes the current crossing the primary winding Lp, If denotes the current crossing the leakage inductance Lf of the transformer, Vr' denotes the voltage across the terminals of the capacitor Cr', V_{Ls} denotes the voltage across the terminals of the secondary winding Ls, Vs denotes the output voltage of the converter, M denotes the mid-point of the half-bridge and VM denotes the voltage at the point M.

Figures 3A and 3B illustrate the shape of the control signals Drv1 and Drv2 of the switches T1 and T2.

Figure 3C represents the voltage VM present at the mid-point M of the half-bridge.

Figure 3D represents the variations in the voltage Vr' across the terminals of the resonance capacitor Cr' and the variations in the voltage V_{Ls} across the terminals of the secondary winding Ls.

Figure 3E represents the current If crossing the leakage inductance Lf of the transformer.

Finally, Figure 3F represents the current Ip crossing the primary winding Lp.

In these figures, T represents the period of the opening/closing cycle of the switches T1 and T2. A dead time tm during which the two switches T1 and T2 are opened is envisaged between each switch closure. A first dead time tm1 is envisaged before the closure of the switch T1 and a second dead time tm2 is envisaged before the closure of the switch T2. With reference to Figures 3A and 3B, the switch T1 is closed during the period of time [tm1, αT] and the switch T2 is closed during the period of time [αT+tm2, T].

At the beginning, the switches T1 and T2 are open and the current in the leakage inductance Lf is equal to Ip0. An operating phase referenced P1 then begins. During this phase, the current If drops. This current, referred back to the primary, is in a sense such that it will then help, together with the magnetizing current engendered by the application of the voltage Ve to the primary, to charge the parasitic capacitances of the switches T1 and T2 in particular to obtain soft switching since the current VM increases naturally up to Ve. The current If referred back to the primary therefore makes it possible to increase the current Ip as shown in Figure 3F. The switch T1 is closed after the dead time tm1. It is necessary for the switch T1 to be closed before the current Ip reaches a zero value while the point M has reached the voltage Ve so as to ensure closure of the switch T1 at zero voltage. The voltage Ve is thus applied to the terminals of the primary winding Lp and of the capacitor Cr'. This first operating phase terminates at the time t1 when the current If becomes zero. The diode D1 then opposes the passage of a negative current If through the secondary circuit of the converter.

A second phase, referenced P2, then begins. During this phase, the current Ip continues to increase up to a value Ip2 with a smaller slope since there is no longer any current If referred back to the primary. This phase terminates at the time aT.

A third phase, referenced P3, then begins. The switches T1 and T2 both being open during the period tm2, the current Ip made up of the magnetizing current increased by the mean output current referred back to the primary in the turns ratio m, helps to make the voltage VM descend naturally to 0 volts. After the dead time tm2, the switch is closed while the voltage at its terminals is zero, thereby ensuring switching at zero voltage. The leakage inductance Lf starts resonating with the capacitor Cr' referred back to the secondary. The current Ip through the primary winding then begins its decay following a sinusoid in phase opposition with that of the current If. This resonance phase is interrupted at the time T while the current in the leakage inductance Lf is equal to IfO. A new cycle then begins with a new phase P1.

The values of the components of this circuit are calculated in compliance with the following rules:
- the capacitance of the capacitor Cr' is calculated so as, referred back to the secondary, to resonate with the leakage inductance Lf of the transformer Trf, seen from the secondary, at a frequency of around half the chopping frequency;
- the inductance of the primary winding is calculated as a function of the chopping frequency, of the voltage Ve and of the duty ratio making it possible to obtain a peak current Ip sufficient to obtain soft switching of the switches without any load at output (no-load).

The magnetizing current at the primary depends in particular on the MOSFET transistors used for T1 and T2 and on the transformer.

This converter has the following advantages in particular:
- elimination of the capacitor Cr and of the smoothing inductance L1;
- elimination of the large-value capacitor Cdp and replacement thereof by a capacitor Cr' of lower value;
- soft switching of the switches T1 and T2 even for large powers;
- switching losses curbed by reason of the presence of the leakage inductance Lf which controls the slope of the current Ip at the moment of the switching of the switch T1;
- the provision of the current If referred back to the primary to charge the parasitic capacitances of the switches may make it possible to reduce the strength of the magnetizing current and to thus increase the control frequencies of the switches T1 and T2; and
- the RMS current and the peak current at the secondary are not as sizable as during zero current switching; the losses by conduction at the secondary are therefore reduced.

## Claims

1. DC voltage converter with soft switching, comprising a transformer (Trf) having a primary winding (Lp) and a secondary winding (Ls), the primary of the converter being of the type with half-bridge arrangement and capable of being linked to an input voltage source (Ve) by way of two switches (T1, T2) and the secondary of the converter being of quasi-resonant half-wave type and able to be linked to a load, means for alternately controlling the two switches (T1, T2), at fixed frequency, by pulse width modulation as a function of the output voltage of the converter,
**characterized in that** a capacitor (Cr') of small value is arranged in series with said primary winding (Lp), which capacitor referred back to the secondary is designed to resonate with an inductance (Lf) present at the secondary and to produce said quasi-resonance at the secondary.

2. Converter according to Claim 1, **characterized in that** said inductance (Lf) is the transformer's leakage inductance seen from the secondary.

3. Converter according to Claim 1, **characterized in that** said inductance (Lf) is the series inductance formed from the transformer's leakage inductance seen from the secondary and of an additional inductance arranged between the secondary winding and said load.

4. Converter according to one of Claims 1 to 3, **characterized in that** the switches are switched while the current in said inductance is zero.

5. Converter according to one of Claims 1 to 3, **characterized in that** the switches are switched while the current in said inductance is not zero and **in that** said current is such that, referred back to the primary, it helps to achieve soft switching of the switches.
